# EUROPÄISCHE PATENTANMELDUNG

(11) **EP 2 596 885 A2**
(43) Veröffentlichungstag der Anmeldung: **29.05.2013**
(21) Anmeldenummer: 12193778.3
(22) Anmeldetag: 22.11.2012
(51) Int. Cl.: B22F 5/12, B22F 5/10

(54) **Keramische und/oder pulvermetallurgische Formteile und Verfahren zu ihrer Herstellung**

(30) Priorität: 25.11.2011 DE 102011087110
(71) Anmelder: Fraunhofer-Gesellschaft zur Förderung der angewandten Forschung e.V., 80686 München (DE)
(72) Erfinder: Slawik, Tim, 01159 Dresden (DE); Baumann, Andreas, 06484 Quedlinburg (DE); Scholl, Roland, 01157 Dresden (DE); Handke, Toni, 01097 Dresden (DE); Moritz, Tassilo, 09599 Freiberg (DE); Richter, Hans-Jürgen, 01257 Dresden (DE); Scheithauer, Uwe, 01309 Dresden (DE); Zins, Michael, 01731 Kreischa (DE); Zelm, Roland, 01307 Dresden (DE)
(74) Vertreter: Rauschenbach, Marion

(57) **Zusammenfassung**

Die Erfindung bezieht sich auf das Gebiet der Keramik und betrifft keramische und/oder pulvermetallurgische Formteile, wie sie beispielsweise als Formteile für Brennstoffzellenelemente angewandt werden können.

Die Aufgabe der vorliegenden Erfindung besteht in der Angabe von keramischen und/oder pulvermetallurgischen Formteilen, die stab-, strang-, und/oder röhrenförmig als Formteil ausgebildet einzeln oder als Verbund und/oder Netzwerk angeordnet sind und in der Angabe eines einfachen und kostengünstigen Verfahrens zu ihrer Herstellung,

Die Aufgabe wird gelöst durch keramische und/oder pulvermetallurgische Formteile, die stab-, strang- und/oder röhrenförmig ausgebildet sind und aus einer oder mehreren neben- und/oder übereinander angeordneten keramischen und/oder pulvermetallurgischen Grünfolien bestehen, die mittels papier- und oder textiltechnologischer Verfahren gewickelt sind, und die eine oder mehrere Fügenähte auf ihrer Oberfläche aufweisen.

## Beschreibung

Die Erfindung bezieht sich auf die Gebiete der Werkstofftechnik und Keramik und betrifft keramische und/oder pulvermetallurgische Formteile, wie sie beispielsweise als stab-, strang- oder röhrenförmige Formteile für Brennstoffzellenelemente, Filter, Rohrverbunde für thermisch belastete Baugruppen oder keramische Netzwerke angewandt werden können und ein Verfahren zu ihrer Herstellung.

Tubulare metallische und keramische Strukturen werden unter anderem zum Aufbau tubularer Brennstoffzellenelemente genutzt. Als Verfahren zur Herstellung mehrlagiger konzentrischer Verbunde wird in der US 2010/0038012 A1 das Aufschrumpfen von ineinander gelagerten tubularen Formkörpern während einer Wärmebehandlung bezeichnet. Die hier vorgelegte innere Struktur ist bereits konsolidiert und schwindet bei der gemeinsamen Wärmebehandlung, im Gegensatz zu der an deren äußeren Umfang aufschrumpfenden Komponente, nicht. Entsprechende Vorformkörper können durch Extrusion, Spritzgießen, Press- oder Gießformgebung hergestellt werden. Das Aufbringen dünner funktioneller Schichten kann durch Pastendruck oder beispielsweise Dip-Coating erfolgen.

Konzentrisch gefügte metall-keramische Rohrverbunde werden auch für ballistische Anwendungen und für thermisch belastete Baugruppen verwendet. In der US 2007/0261599 A1 ist hierfür ein kombiniertes Verfahren zur Gießformgebung und anschließender Infiltration zur Herstellung entsprechender Werkstoffverbundstrukturen unter Nutzung eines Gyrotrons (Mikrowellensinterung) angegeben.

Mikrotubulare keramische Netzwerke mit tubularen Querschnitten zwischen 0,01 bis 2,00 µm werden in der US 5.094.906 B beschrieben. Entscheidend für das Zustandekommen der Vernetzung ist hier die Fähigkeit zur Verbundbildung der einzelnen keramischen Tubuli. Die vliesartigen Strukturen können als thermischer Isolator, als Katalysatorträger oder als Filtermaterial eingesetzt werden.

Poröse tubulare keramisch Strukturen mit gerichteten Porengradienten, welche über isostatische Pressformgebung hergestellt werden, wurden in der US 4.629.483 beschrieben. Die konzentrisch angeordneten Lagen des makroskopischen, tubularen Formkörpers werden durch Pressformgebung hergestellt und im Grünkörperstadium gefügt.

Als tubulare Strukturen gelten auch Hohlfasern. Keramische Hohlfasern zur Verwendung für tubulare Brennstoffzellenelemente mit Innendurchmessern zwischen 1 und 4 mm sowie Außendurchmessern zwischen 0,8 und 3,5 mm bei einer Länge (grün) von 420 mm werden angeboten (Keramische Folien GmbH (KERAFOL)) angeboten (Ceramic Hollow Fibre, Produktdatenblatt).

Tubulare keramische Schichtverbunde mit integrierten metallischen Netzwerken (Vliesen, Gelegen, Geflechten) können durch Übergießen von diesen mit keramischen Schlicker und anschließender Sinterbehandlung erhalten werden. In der US 4.276.331 B wird eine entsprechende Ausführung zur Anwendung als thermische Isolation für den Abgasstrang von Verbrennungskraftmaschinen beschrieben. Technologische Ausführungen zu keramischen und pulvermetallischen Grünfolien sowie von keramik- oder metallpulvergefüllten Papieren sind u.a. aus der DE 102006043095 A1, der US 5.145.811 B sowie aus der WO 2010.051345 A2 bekannt. Eine Weiterverarbeitung der keramischen und/oder pulvermetallgefüllten Grünfolien und Papiere ist jedoch nicht bekannt.

Nach der DE 10 2007 026 306 A1 ist ein Verfahren zur Herstellung von Spiral-Puls-Generatoren und Gasentladungslampen bekannt. Hier werden keramische Grünfolie und Metallfolie gemeinsam um ihre Längsachse gewickelt und co-gesintert.

Aus der DE 60 2004 007 102 T2 ist ein Verfahren und eine Vorrichtung zur Herstellung spiralförmig gewickelter elektroaktiver Aktoren bekannt. Diese Aktoren bestehen jedoch aus nur einem Werkstoff und sind um eine Achse, die wiederum selbst gekrümmt ist, gekrümmt.

Nachteilig bei den Lösungen des Standes der Technik ist, dass eine unzureichende Formenvielfalt an keramischen und/oder pulvermetallurgischen Formteilen mit den Verfahren nach dem Stand der Technik erreichbar ist.

Die Aufgabe der vorliegenden Erfindung besteht in der Angabe von keramischen und/oder pulvermetallurgischen Formteilen, die stab-, strang-, und/oder röhrenförmig als Formteil ausgebildet einzeln oder als Verbund und/oder Netzwerk angeordnet sind und in der Angabe eines einfachen und kostengünstigen Verfahrens zu ihrer Herstellung,

Die Aufgabe wird durch die in den Ansprüchen angegebene Erfindung gelöst. Vorteilhafte Ausgestaltungen sind Gegenstand der Unteransprüche.

Bei dem erfindungsgemäße Verfahren zur Herstellung von keramischen und/oder pulvermetallurgischen Formteilen mittels papier- und/oder textiltechnologischer Verfahren werden aus einer oder mehreren keramischen und/oder pulvermetallurgischen Strukturgrünfolien stab-, strang- und/oder röhrenförmige Formteile hergestellt, wobei als Strukturgrünfolien strukturierte Folien zur Integration funktioneller Eigenschaften eingesetzt und weiterhin symmetrisch oder asymmetrisch aufgebaute Schichtabfolgen mit gegen- oder gleichläufiger Wickelstruktur realisiert werden.

Vorteilhafterweise werden die keramischen und/oder pulvermetallurgischen Formteile mittels Wickeln von streifenförmigen Strukturgrünfolien über Kerne, Dorne, Schablonen oder freigeformt und nachfolgend wird eine Sinterung realisiert. Ebenfalls vorteilhafterweise werden Strukturgrünfolien eingesetzt, die mittels Pastendruck oder Laser oder Umformen strukturiert sind.

Weiterhin vorteilhafterweise werden als Wickelstrukturen Kreuzwicklungen oder Spiralwicklungen realisiert.

Und auch vorteilhafterweise werden Strukturgrünfolien zur Realisierung von Poren- und Werkstoffgradienten eingesetzt, wobei noch vorteilhafterweise Strukturgrünfolien zur Realisierung von Eigenschaftsgradienten in radialer Richtung und/oder über den Querschnitt und/oder über die Länge des Formteiles realisiert werden.

Die erfindungsgemäßen keramischen und/oder pulvermetallurgischen Formteile, die erfindungsgemäß mittels papier- und/oder textiltechnologischer Verfahren hergestellt worden sind, bestehen aus einer oder mehreren neben- und/oder übereinander angeordneten keramischen und/oder pulvermetallurgischen Strukturgrünfolien mit integrierten funktionellen Eigenschaften und symmetrisch oder asymmetrisch aufgebaute Schichtabfolgen mit gegen- oder gleichläufiger Wickelstruktur.

Vorteilhafterweise sind ein oder mehrere keramische Materialien in einer oder in mehreren Strukturgrünfolien vorhanden.

Ebenfalls vorteilhafterweise sind ein oder mehrere pulvermetallurgische Materialien in einer oder in mehreren Strukturgrünfolien vorhanden.

Weiterhin vorteilhafterweise enthalten mehrere Strukturgrünfolien unterschiedliche keramische und/oder pulvermetallurgische Materialien.

Und auch vorteilhafterweise sind mehrere Strukturgrünfolien neben und/oder übereinander angeordnet und weisen einen hinsichtlich der keramischen und/oder pulvermetallurgischen Materialien gradierten Aufbau in radialer Richtung und/oder über den Querschnitt und/oder über die Länge des Formteiles auf.

Es ist auch vorteilhaft, wenn die Formteile über Kerne, Dorne, Schablonen oder freigeformt gewickelt worden sind.

Weiterhin ist es vorteilhaft, wenn eine oder mehrere Fügenähte in den Formteilen vorhanden sind, die gerade, gedreht und/oder gekreuzt sind.

Und auch vorteilhaft ist es, wenn die Grünkörper gesintert sind.

Mit der erfindungsgemäßen Lösung wird es erstmals möglich, keramische und/oder pulvermetallurgische Grünfolien zu einer großen Breite an stab-, strang- und/oder röhrenförmigen Formteilen zu verarbeiten und dabei auch hinsichtlich ihrer Zusammensetzung und ihrer Struktur eine große Breite zu realisieren.

Dies wird möglich, weil keramische und/oder pulvermetallurgische Grünfolien aufgrund der Ihnen eigenen Biegeschlaffheit und Flexibilität mittels papiertechnologischer Verfahren verarbeitbar sind.

Durch das Wickeln von keramischen und/oder pulvermetallurgischen Grünfolien können stab-, strang- und/oder röhrenförmige Formteile mit einem mehrlagigen Aufbau erhalten werden. Durch die Verwendung von keramischen und/oder pulvermetallurgischen Grünfolien können Werkstoffverbunde mit funktionellen Eigenschaften durch Co-Sinterung erhalten werden. Ebenfalls die Herstellung von porösen und/oder dicht gesinterten sowie gradierten stab-, strang- und/oder röhrenförmigen Formteilen möglich. Die Kombination von Grünfolienfertigung und dem in der Papier- und Textiltechnik angewendeten Wickelverfahren erweitert die Fertigungsoptionen für die dünnen und flächigen mit Keramik- und/oder Metallpulver gefüllten Grünfolien über das bisher in der industriellen Praxis umgesetzte Maß hinaus. So können z.B. rohrartige Strukturen, welche wahlweise mit oder ohne Kernmaterial nach Durchlaufen einer gemeinsamen Sinterbehandlung zu einem Verbundformkörper mit spezifischen Struktur- und Funktionsmerkmalen vorliegen, erzeugt werden. Die Verwendung von mehrlagigen und mittels Pastendruck oder Laser strukturierten Grünfolien ermöglicht dabei die Integration funktioneller Eigenschaften, z.B. elektrische Kontaktierung oder Heizung in den Umfang der gewickelten Hüllstruktur. Schließt diese eine weitere keramische oder pulvermetallische Formkomponente ein, so kann damit die Integrationsdichte der darzustellenden Systemkomponente weiter erhöht werden. Dies bietet die interessante, weil gemessen am finanziellen Aufwand, sehr wirtschaftliche Möglichkeit zur Montage entsprechender Systemkomponenten noch im Formgebungsprozess, des anschließend zu co-sinternden Materialverbundes. Die Wickeltechnik bietet dabei durch die Wahl der symmetrisch oder asymmetrisch aufgebauten Schichtabfolge, wie auch durch die gegen- oder gleichläufige Wickelstruktur, z.B. der Kreuzwicklung, die Möglichkeit zur strukturellen Stabilisierung des Verbundformkörpers. Dies ist insbesondere für die Formstabilität während der Sinterschwindung von z.B. anisotrop schwindenden Partikelpackungen sowie für die mechanische Stabilität von thermisch und/oder mechanisch hoch beanspruchten Systemkomponenten von wesentlichem Vorteil.

Zudem ergeben sich bedeutende Vorteile zur Herstellung stab-, strang- und/oder röhrenförmiger Formteile mit einem Eigenschaftsgradienten in radialer Richtung. Dieser wird durch die Kombination von verschiedenen Folien erreicht, die sich in ihrer Zusammensetzung unterscheiden, aber gemeinsam gesintert werden können und nach diesem Prozess ein Gesamtbauteil bilden, das in radialer Richtung einen Eigenschaftsgradienten aufweist.

Für das fehlerfreie Wickeln der Strukturen ist eine definierte Zugspannung in der Folie notwendig, die sich mit langen Folienstücken realisieren lässt.

Nur die Adaption der papiertechnischen Wickeltechnologie ermöglicht die Verarbeitung von nahezu endlosen Folien direkt von der Rolle, wodurch eine einfache und schädigungsfreie Handhabung sowie das Wickeln mit definierten Zugkräften möglich sind.

Die Richtlinien für die Zuschnittgestaltung der Grünfolien können sich ebenso wie die anzuwendende Wickeltechnik an dem Erfahrungsschatz und dem technologischen Umfeld der papierverarbeitenden Analogoptionen orientieren. Dazu gehören auch Möglichkeiten zum Strukturieren und Umformen (Bördeln) der zu Hülsen verarbeiteten Keramik- und/oder Metallfolien. Weiterhin können diese Halbzeuge wiederum als Ausgangsmaterial für weiterführende Verarbeitungsprozesse, wie dem Folienhinterspritzen oder in Kombination mit dem Extrudieren von Profilkomponenten, welche in die gewickelte Hülse eingebracht werden, verwendet werden. Zum Fügen der zu wickelnden Strukturelemente können beispielsweise die thermoplastischen Eigenschaften entsprechender Folienbinder oder geringe Mengen Lösungsmittel oder Laminierhilfsmittel verwendet werden. Es können entsprechende Bindemittel für die Verbindung der gewickelten Grünfolien/Lagen eingesetzt werden, vorteilhafterweise solche Bindemittel, die bereits Bestandteil der Grünfolien sind. Die mittels Wickeltechnik hergestellten Folienhülsen zeichnen sich u.a. durch dünne Wandstärken und große Außendurchmesser aus. Dabei können die Mantelflächen mit filigranen Strukturen belegt und aus mehreren übereinander gewickelten Schichten aufgebaut sein. Die Darstellung von mehrlagigen Schicht- und Werkstoffverbunden ist dabei ebenso wie die Gestaltung von Poren- und Werkstoffgradienten normal zur Wickelachse möglich. Durch die Verwendung von z.B. porös und/oder dicht sinternden Ausgangspulvern ist es auch möglich zu cosinternde Werkstoffverbunde ohne und/oder mit gleichen oder differenzbehafteten Porenanteilen und -größenverteilungen herzustellen. Damit wären u.a. Anwendungen im Bereich der tubularen Filterelemente, der tubularen Brennstoffzellen oder anderer rotationssymmetrisch aufgebauter Mehrlagenverbunde möglich.

Dimension von Grünfolie und Wickelkörper orientieren sich an den Dimensionen entsprechender Fertigungsverfahren und an der Zuschnittgestaltung der Grünfolie. Die angewendeten Verfahren gestatten beides in einem weiten Bereich zu variieren. Funktionelle Eigenschaften des späteren Wickelkörpers können bereits bei der Fertigung der Grünfolie(n) in diese eingebracht werden. Dazu zählen insbesondere die Integration von Mehrschichtwerkstoffverbunden, wie z.B. Metall-Keramik, und die Kombination von dicht und porös co-sinternden sowie in ihren Eigenschaften gradierten Schichtabfolgen.

Durch das Wickeln von Grünfolien um einen Kern können mehrlagige und auch kreuzweise überlagerte Schichtverbundprofile hergestellt werden, welche aufgrund ihrer geometrisch definierten Überstruktur insbesondere zu einer Stabilisierung der Endkontur während des Wärmebehandlungsschrittes führen. Insbesondere für irregulär und anisotrop schwindende Partikelpackungen stellt dies eine Möglichkeit zur Fertigung von endkonturnahen und sinterstabilen tubularen Formkörpern dar. Beispielsweise können ein oder mehrere schmale Streifen, die vor dem Wickelvorgang auf eine bestimmte Breite zugeschnitten werden, unter einem Winkel einem Wickeldorn zugeführt und spiralförmig zu einer endlosen Hülse oder einem Rohr gewickelt werden. Die Wicklungen der einzelnen Lagen können sich einander Überlappen. Die Anzahl der Lagen richtet sich nach der Anforderung der Hülsen und auch die Werkstoffe können kombiniert werden. Dabei können nur eine aber auch mehr als 40 Lagen verwendet werden. Die Bauteilgeometrie wird dabei durch die Geometrie des Wickeldorns vorgegeben. Der Wickeldorn kann als Kern im Bauteil verbleiben oder herausgelöst werden. Das Herauslösen kann durch Abziehen, Ausschmelzen oder durch Klappen oder Zerlegen erfolgen.

Die einzelnen Lagen der Hülsen können durch Anpresswalzen oder einem kreuzweisen verschlungenen Wickelriemen, zur besseren Verbindung, zusammengepresst werden. Als Hilfsmittel zur Verbindung der einzelnen Lagen kann ein anorganisches oder organisches Bindemittel und/oder Temperatur eingesetzt werden. Das Bindemittel kann keramisches und/oder pulvermetallurgisches Material enthalten. Der Auftrag des Bindemittels kann beispielsweise durch einen Sumpf-, Sprüh oder Walzenauftrag erfolgen. Die endlosen Hülsen der Wickelmaschine können durch eine Schneidvorrichtung auf eine gewünschte Länge geschnitten werden. Die Rohrgeschwindigkeit kann von wenigen Metern pro Minute bis über 200 m/min betragen und der Umfang der Hülsen kann von einigen Millimetern bis über einem Meter variieren.

Grün- und Sinterkörper sind durch eine am Umfang oder in Achsenlängsrichtung verlaufende Fügenaht gekennzeichnet. Diese kann bei mehrlagigen Verbunden auch kreuzweise und mehrfach übereinander liegen.

Anwendungsgebiete für Serienprodukte liegen insbesondere in den Bereichen tubulare Brennstoffzellen, tubulare Filter sowie rohrartige Hüllstrukturen. Gradierte tubulare Strukturen könnten Einsatz in allen Hochtemperaturbereichen (Stahlindustrie u.ä.) finden.

Nachfolgend wird die Erfindung an mehreren Ausführungsbeispielen näher erläutert.

### Dabei zeigt

- Fig. 1: die schematische Darstellung eines rohrförmigen Wickelkörpers aus 5 Lagen Grünfolie mit Wickeldorn,
- Fig. 2: die schematische Darstellung eines kegelförmigen Wickelkörpers,
- Fig 3: die schematische Darstellung eines nicht rotationssymmetrischen Wickelkörpers mit stirnseitig angebrachten Flanschen.
- Fig. 4: die schematische Darstellung eines kreuzgewickelten rohrförmigen Wickelkörpers bestehend aus metallischen und keramischen Lagen
- Fig. 5: die schematische Darstellung einer durch Folienwickeln hergestellten keramischen Eintaucheinguss bzw. -ausgussdüse, wie sie zur Stahlerzeugung verwendet wird

### Beispiel 1

### Sinterfähiger keramischer Wickelkörper bestehend aus ZrO₂-Grünfolien

Gemäß der Zusammensetzung nach Tabelle 1 wird aus einem Schlicker eine ZrO₂-Grünfolie mittels Foliengießen hergestellt.

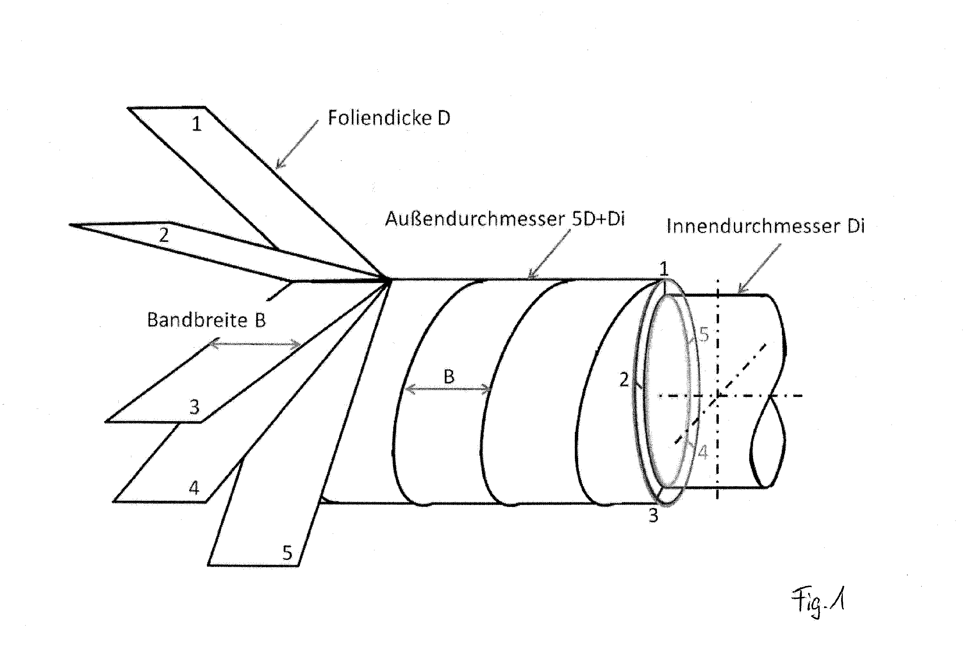

Aus dieser Grünfolie werden 5 Streifen mit den Abmessungen 1 x 50 cm geschnitten. Nachfolgend werden diese Streifen unter einem Winkel von 20 ° einem Wickeldorn mit einem Durchmesser von 2 cm zugeführt und spiralförmig zu einem endlosen Rohr gewickelt (Fig. 1). Die Wicklungen der einzelnen Lagen überlappen einander.

Danach wird der gewickelte Grünkörper bei 1450 °C unter Luft 2h gesintert.

Die Herstellung eines derartigen gesinterten Formkörpers ist bisher nur mit der angegebenen Technologie möglich.

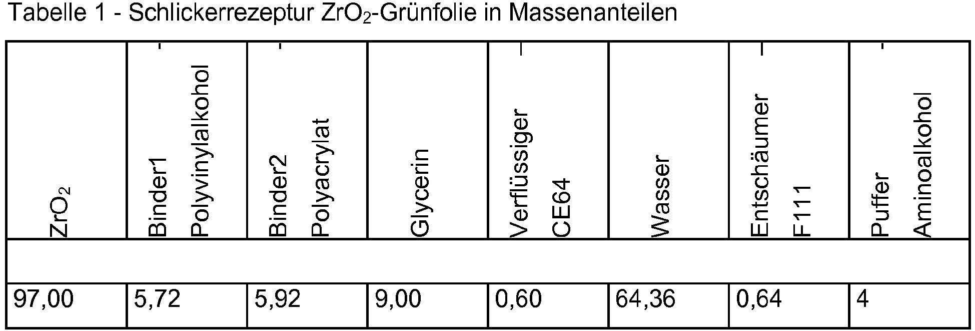

### Beispiel 2

### Sinterfähiger metallischer Wickelkörper bestehend aus CroFer22APU-Grünfolien

Gemäß der Zusammensetzung nach Tabelle 2 wird aus einem Schlicker eine CroFer22APU -Grünfolie mittels Foliengießen hergestellt.

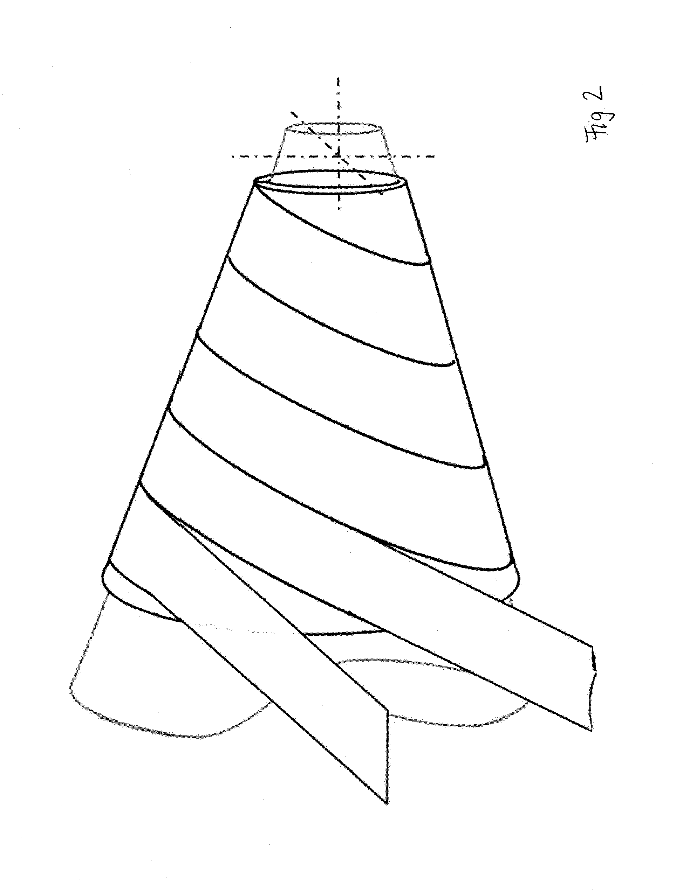

Aus dieser Grünfolie werden eine Vielzahl an Streifen mit den Abmessungen 1 x 30 cm geschnitten, die zu einem einzigen Streifen zusammengesetzt werden. Zur Herstellung der Verbindung wird ein organisches Bindemittel verwendet. Nachfolgend wird der Streifen unter einem Winkel von 40 ° über einen kegelförmigen Kern spiralförmig zu einer endlosen Hülse gewickelt (Fig. 2). Die Wicklungen der einzelnen Lagen überlappen einander.

Danach wird der gewickelte Grünkörper bei 1370 °C unter H₂-Atmosphäre für 1h gesintert.

Die Herstellung eines derartigen gesinterten Formkörpers ist bisher nur mit der angegebenen Technologie möglich.

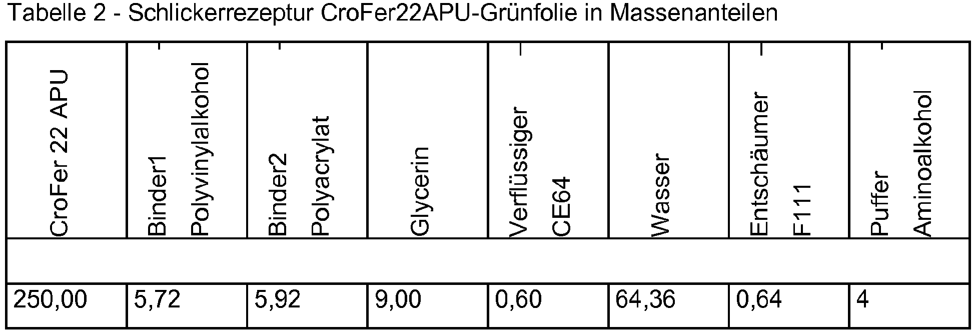

### Beispiel 3

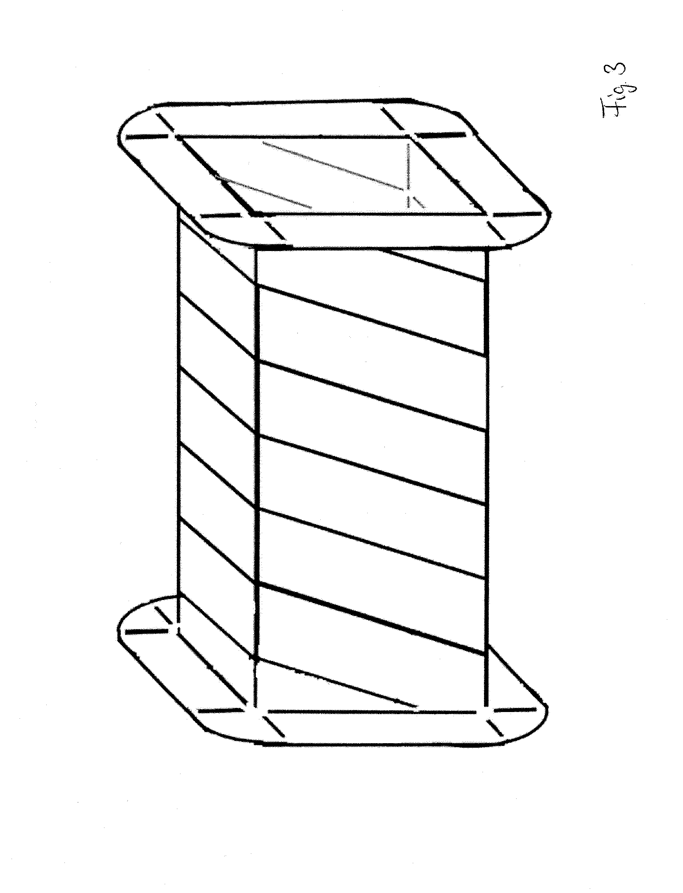

Gemäß Beispiel 1 hergestellte Streifen aus ZrO₂-Grünfolie werden zu einem Bauteil gemäß Fig. 3 hergestellt. Die Wicklungen der einzelnen Lagen überlappen teilweise einander.

Danach wird der gewickelte Grünkörper bei 1450 °C unter Luft 2h gesintert.

Die Herstellung eines derartigen gesinterten Formkörpers ist bisher nur mit der angegebenen Technologie möglich.

### Beispiel 4

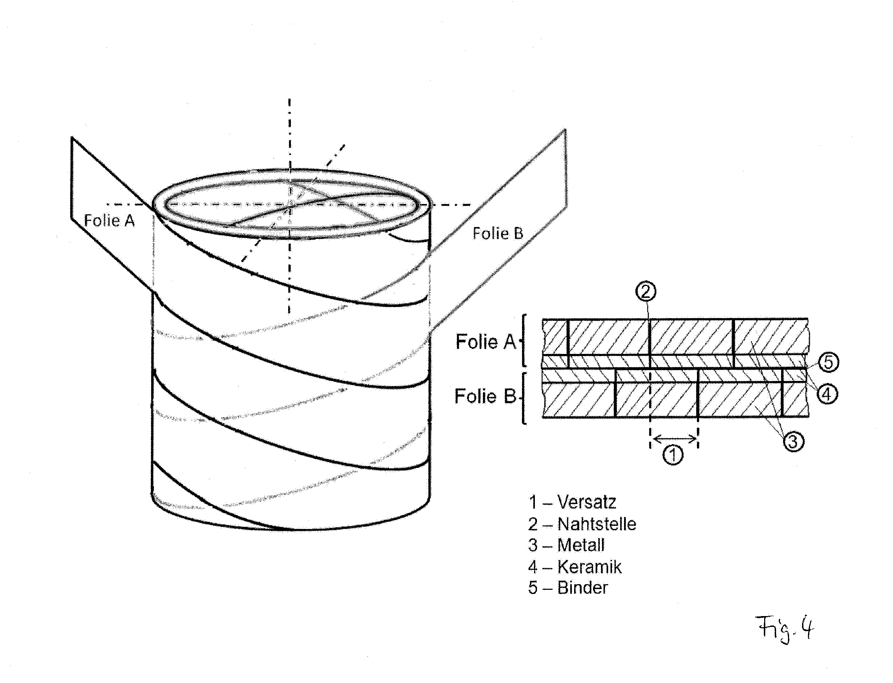

Gemäß Beispiel 1 und 2 hergestellte Streifen aus ZrO₂-Grünfolie und CroFer22APU-Grünfolie werden zu einem Bauteil gemäß Fig. 4 hergestellt. Die Wicklungen der einzelnen Lagen überlappen einander nicht.

Danach wird der gewickelte Grünkörper bei 1370 °C unter H₂-Atmosphäre für 2h gesintert.

Die Herstellung eines derartigen gesinterten Formkörpers ist bisher nur mit der angegebenen Technologie möglich.

### Beispiel 5

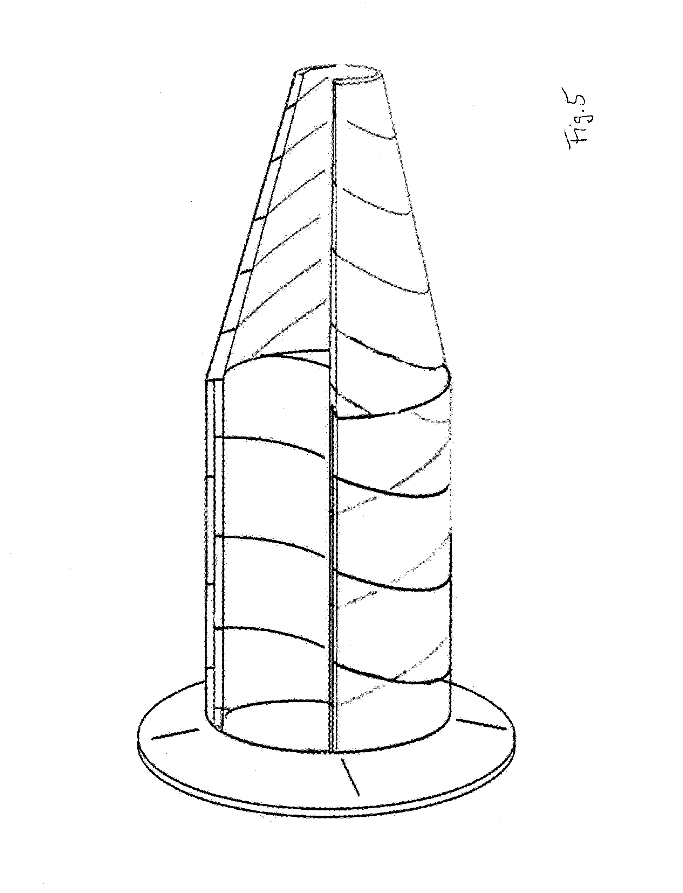

Gemäß Beispiel 1 hergestellte Streifen aus ZrO₂-Grünfolie werden zu einem Bauteil gemäß Fig. 5 hergestellt. Die Wicklungen der einzelnen Lagen überlappen teilweise einander.

Danach wird der gewickelte Grünkörper bei 1450 °C unter Luft 2h gesintert.

Die Herstellung eines derartigen gesinterten Formkörpers ist bisher nur mit der angegebenen Technologie möglich.

## Patentansprüche

1. Verfahren zur Herstellung von keramischen und/oder pulvermetallurgischen Formteilen mittels papier- und/oder textiltechnologischer Verfahren bei dem aus einer oder mehreren keramischen und/oder pulvermetallurgischen Strukturgrünfolien stab-, strang- und/oder röhrenförmige Formteile hergestellt werden, wobei als Strukturgrünfolien strukturierte Folien zur Integration funktioneller Eigenschaften eingesetzt und weiterhin symmetrisch oder asymmetrisch aufgebaute Schichtabfolgen mit gegen- oder gleichläufiger Wickelstruktur realisiert werden.

2. Verfahren nach Anspruch 1, bei dem die keramischen und/oder pulvermetallurgischen Formteile mittels Wickeln von streifenförmigen Strukturgrünfolien über Kerne, Dorne, Schablonen oder freigeformt werden und nachfolgend eine Sinterung realisiert wird.

3. Verfahren nach Anspruch 1, bei dem Strukturgrünfolien eingesetzt werden, die mittels Pastendruck oder Laser oder Umformen strukturiert sind.

4. Verfahren nach Anspruch 1, bei dem als Wickelstrukturen Kreuzwicklungen oder Spiralwicklungen realisiert werden.

5. Verfahren nach Anspruch 1, bei dem Strukturgrünfolien zur Realisierung von Poren- und Werkstoffgradienten eingesetzt werden.

6. Verfahren nach Anspruch 5, bei dem Strukturgrünfolien zur Realisierung von Eigenschaftsgradienten in radialer Richtung und/oder über den Querschnitt und/oder über die Länge des Formteiles realisiert werden.

7. Keramische und/oder pulvermetallurgische Formteile, hergestellt mittels papier- und/oder textiltechnologischer Verfahren nach mindestens einem der Ansprüche 1 bis 6, aus einer oder mehreren neben- und/oder übereinander angeordneten keramischen und/oder pulvermetallurgischen Strukturgrünfolien mit integrierten funktionellen Eigenschaften und symmetrisch oder asymmetrisch aufgebaute Schichtabfolgen mit gegen- oder gleichläufiger Wickelstruktur.

8. Keramische und/oder pulvermetallurgische Formteile nach Anspruch 7, bei denen ein oder mehrere keramische Materialien in einer oder in mehreren Strukturgrünfolien vorhanden sind.

9. Keramische und/oder pulvermetallurgische Formteile nach Anspruch 7, bei denen ein oder mehrere pulvermetallurgische Materialien in einer oder in mehreren Strukturgrünfolien vorhanden sind.

10. Keramische und/oder pulvermetallurgische Formteile nach Anspruch 7, bei denen mehrere Strukturgrünfolien unterschiedliche keramische und/oder pulvermetallurgische Materialien enthalten.

11. Keramische und/oder pulvermetallurgische Formteile nach Anspruch 7, bei denen mehrere Strukturgrünfolien neben und/oder übereinander angeordnet sind und einen hinsichtlich der keramischen und/oder pulvermetallurgischen Materialien gradierten Aufbau in radialer Richtung und/oder über den Querschnitt und/oder über die Länge des Formteiles aufweisen.

12. Keramische und/oder pulvermetallurgische Formteile nach Anspruch 7, bei denen die Formteile über Kerne, Dorne, Schablonen oder freigeformt gewickelt worden sind.

13. Keramische und/oder pulvermetallurgische Formteile nach Anspruch 7, bei denen eine oder mehrere Fügenähte in den Formteilen vorhanden sind, die gerade, gedreht und/oder gekreuzt sind.

14. Keramische und/oder pulvermetallurgische Formteile nach Anspruch 7, bei denen die Grünkörper gesintert sind.
